# EUROPEAN PATENT SPECIFICATION

(11) **EP 2 311 702 B1**
(45) Date of publication and mention of the grant of the patent: **19.12.2012**
(21) Application number: 09173242.0
(22) Date of filing: 16.10.2009
(51) Int. Cl.: B60T 8/26, B60T 8/40, B62L 3/08

(54) **Braking system for motorcycle**
Bremssystem für ein Motorrad
Système de freinage pour motocyclette

(43) Date of publication of application: 20.04.2011
(73) Proprietor: Yamaha Hatsudoki Kabushiki Kaisha, Iwata-shi, Shizuoka 438-8501 (JP); Continental Automotive Corporation, Yokohama-city Kanagawa 221-0031 (JP); Continental Teves AG & Co. OHG, 60488 Frankfurt (DE)
(72) Inventor: Kajiwara, Kunio c/o Yamaha Hatsudoki Kabushiki Kaisha,, Iwata-shi Shizuoka 438-8501 (JP); Watanabe, Takahiro c/o Yamaha Hatsudoki Kabushiki Kaisha,, Iwata-shi Shizuoka 438-8501 (JP); Kusano, Taishi c/o Continental Automotive Corporation,, Asahi-city Chiba 289-2505 (JP); Uchida, Takanori c/o Continental Automotive Corporation,, Yokohama-city Kanagawa 221-0031 (JP); Kremer, Michael, 64846 Groß-Zimmern (DE); Meixner, Michael, 60320 Frankfurt am Main (DE)
(74) Representative: Grünecker, Kinkeldey, Stockmair & Schwanhäusser

(56) References cited:
- EP-A2- 1 277 635
- EP-A2- 1 964 738
- WO-A1-2007/118760
- WO-A1-2008/090783
- US-B1- 6 409 285

## Description

The present invention relates to a braking system for a motorcycle according to the preamble of independent claim 1. Such a braking system can be taken from the prior art document EP 1 964 738 A2.

As a braking system for a motorcycle, there has been conventionally proposed a braking system including two braking mechanisms and an association mechanism which drives one of the braking mechanisms when the other braking mechanism is operated. Japanese Patent Application Laid-open No. JP2006-312372 A(EP 1721797 A)discloses one example of the braking system having the two braking mechanisms and the association mechanism.

Fig. 16 is a brake fluid circuit diagram of the braking system described in JP 2006-312372 A. As shown in Fig. 16, the braking system 100 includes, for example, a brake lever 101 for operating a front side braking mechanism F. If the brake lever 101 is operated, brake fluid is supplied from a master cylinder 102 to a front wheel brake 103. With this, the front wheel brake 103 is activated.

If the brake lever 101 is operated and brake fluid is pushed out of the master cylinder 102, a pressure rise of liquid in a brake fluid path 104 is detected by a liquid pressure sensor 105 and is output to a control apparatus 106. The control apparatus 106 receives a detection signal from the liquid pressure sensor 105 and controls a motor 107, thereby activating a pump 108. With this, brake fluid in a reservoir 109 is supplied to a rear wheel brake 111 through brake fluid path 110. As a result, the rear wheel brake 111 is activated.

In the braking system 100, if the brake lever 101 is operated, both the front wheel brake 103 and the rear wheel brake 111 are actuated. Similarly, when a brake pedal 112 is operated, both the front wheel brake 103 and the rear wheel brake 111 are actuated.

In the braking system 100, if the vehicle speed varies, a braking force obtained with respect to an operation amount of a brake operation member varies. More specifically, as the vehicle speed is faster, the braking force obtained with respect to the operation amount of the brake operation member is reduced. This is because the higher the vehicle speed and the rotation speed of a brake disk are, the smaller the deceleration of the brake disk becomes. Therefore a rider may be bothered by a feeling of incongruity in the braking operation.

It is an object of the invention to provide a braking system for a motorcycle as indicated above having a stable braking force obtained with respect to an operation amount of a brake operation member.

According to the present invention said object is solved by a braking system for a motorcycle having the features of independent claim 1. Preferred embodiments are laid down in the dependent claims.

Such a braking system for a motorcycle includes a first braking force generating mechanism, a first master cylinder, a first brake fluid passage, a first operation member, a second braking force generating mechanism, a second master cylinder, a second brake fluid passage, a second operation member, a first on-off valve, a third brake fluid passage, a brake fluid pump, a second on-off valve, a control unit and a vehicle speed sensor. The first braking force generating mechanism is supplied with hydraulic pressure, thereby generating a braking force. The first master cylinder supplies hydraulic pressure to the first braking force generating mechanism. The first brake fluid passage connects the first master cylinder and the first braking force generating mechanism to each other. The first operation member is for operating the first master cylinder. The second braking force generating mechanism is supplied with hydraulic pressure, thereby generating a braking force. The second master cylinder supplies hydraulic pressure to the second braking force generating mechanism. The second brake fluid passage connects the second master cylinder and the second braking force generating mechanism to each other. The second operation member is for operating the second master cylinder. The first on-off valve is disposed in the first brake fluid passage. The first on-off valve opens and closes the first brake fluid passage. The third brake fluid passage connects a portion of the first brake fluid passage closer to the first master cylinder than a portion thereof where the first on-off valve is disposed and a portion of the first brake fluid passage on the side of the first braking force generating mechanism to each other. The brake fluid pump is disposed in the third brake fluid passage. The brake fluid pump sends brake fluid from the first braking force generating mechanism toward the first master cylinder. The second on-off valve is disposed in the third brake fluid passage. The second on-off valve opens and closes the third brake fluid passage. When the second operation member is not operated, the control unit opens the first on-off valve and closes the second on-off valve. When the second operation member is operated, the control unit closes the first on-off valve, opens the second on-off valve, and drives the brake fluid pump. The vehicle speed sensor detects a vehicle speed of the motorcycle and outputs the same to the control unit. The control unit changes at least one of the output of the brake fluid pump and the opening of the second on-off valve in accordance with the vehicle speed of the motorcycle detected by the vehicle speed sensor when the second operation member is operated, thereby changing hydraulic pressure supplied to the first braking force generating mechanism when the second operation member is operated.

When the second operation member is not operated, the control unit may drive the brake fluid pump or may not drive the brake fluid pump.

It is preferable that the control unit increases hydraulic pressure supplied to the first braking force generating mechanism with respect to an operation amount of the second operation member as the vehicle speed of the motorcycle detected by the vehicle speed sensor when the second operation member is operated is increased.

The braking system for a motorcycle may further include an operation amount detection section which detects an operation amount of the second operation member. The operation amount detection section may directly or indirectly detect the operation amount of the second operation member. For example, the operation amount detection section may be a hydraulic pressure sensor which detects hydraulic pressure in the second brake fluid passage.

The braking system for a motorcycle may include a storing section which stores a hydraulic pressure map that defines a relation between the operation amount of the second operation member and a reference hydraulic pressure supplied to the first braking force generating mechanism when the second operation member is operated, and a calculating section which calculates a reference hydraulic pressure based on the hydraulic pressure map and the operation amount of the second operation member detected by the operation amount detection section when the second operation member is operated, and which calculates a coefficient suitable for the vehicle speed of the motorcycle detected by the vehicle speed sensor, thereby to change at least one of the output of the brake fluid pump and the opening of the second on-off valve such that hydraulic pressure supplied to the first braking force generating mechanism becomes equal to a set hydraulic pressure obtained by multiplying the reference hydraulic pressure by the coefficient. According to this configuration, since the same hydraulic pressure map is always referred to, it is unnecessary to store a plurality of hydraulic pressure maps in the storing section. For example, if hydraulic pressure maps are provided for respective vehicle speeds, it is unnecessary to read one of the hydraulic pressure maps whenever the vehicle speed is changed. According to this configuration, on the contrary, since the hydraulic pressure map to be referred to is the same even if the vehicle speed is changed, it is unnecessary to newly read another hydraulic pressure map. Thus, it is possible to prevent the control from being complicated.

It is preferable that the calculating section changes hydraulic pressure supplied to the first braking force generating mechanism by changing the opening of the second on-off valve. For example, as compared with a case where hydraulic pressure supplied to the first braking force generating mechanism is changed by changing output of the brake fluid pump, it is possible to control hydraulic pressure more precisely. It is also possible to swiftly change hydraulic pressure.

It is preferable that in a low speed region where the vehicle speed of the motorcycle is relatively low, a variation amount of the coefficient with respect to the variation in vehicle speed of the motorcycle is greater than that in a high speed region where the vehicle speed of the motorcycle is relatively high. In the high speed region, the magnitude of the braking force obtained with respect to the operation amount of the second operation member does not change so much as the vehicle speed is changed. In the low speed region, on the other hand, the magnitude of the braking force obtained with respect to the operation amount of the second operation member is largely changed as the vehicle speed is changed. Therefore, if the variation amount of the coefficient with respect to the change of the vehicle speed in the low speed region is set to be great, the magnitude of the braking force obtained with respect to the operation amount of the brake operation member can be more stabilized in all speed regions.

When the vehicle speed of the motorcycle detected by the vehicle speed sensor is zero, the control unit does not supply hydraulic pressure to the first braking force generating mechanism even if the second operation member is operated. That is, when the vehicle speed is zero, the control unit does not operate the first braking force generating mechanism in association with the operation of the second operation member. Thus, it is possible to suppress the consumption of electric power when the vehicle is not running. Especially in the case of a so-called open-when-nonenergized type on-off valve which opens when electric power is not supplied and which closes when electric power is supplied, it is possible to effectively suppress the consumption of electric power when the vehicle is not running.

Further, in the case of a so-called closed-when-nonenergized type on-off valve which closes when electric power is not supplied and which opens when electric power is supplied, it is possible to more effectively suppress the consumption of electric power when the vehicle is not running.

However, the first and the second on-off valves are not limited to the above-described structures. The first on-off valve may be the so-called closed-when-nonenergized type on-off valve, and the second on-off valve may be the so-called open-when-nonenergized type on-off valve.

In the present invention, when the operation of the second operation member is once released and then the second operation member is again operated, the control unit changes hydraulic pressure supplied to the first braking force generating mechanism when the second operation member is again operated, in accordance with an operation interval between the time when the operation of the second operation member is released and the time when the second operation member is again operated, and in accordance with hydraulic pressure which had been supplied to the first braking force generating mechanism before the operation of the second operation member was released.

According to this structure, when a vehicle speed at the time of last operation of the second operation member and a vehicle speed at the time of current operation of the second operation member are largely different from each other and the operation interval is short, a difference between braking forces obtained at the time of the last operation and at the time of the current operation can be made small. This enables the reduction of a feeling of incongruity given to a rider when the second operation member is operated.

When the operation interval is long, the feeling of incongruity given to a rider is small even if there is a great difference between the braking forces obtained at the time of the last operation and at the time of the current operation. Therefore, it is preferable that only when the operation interval is shorter than a predetermined time period, the control unit changes hydraulic pressure supplied to the first braking force generating mechanism when the second operation member is again operated, in accordance with the operation interval and hydraulic pressure which had been supplied to the first braking force generating mechanism before the operation of the second operation member was released.

More specifically, it is preferable that the control unit includes a storing section which stores a hydraulic pressure reducing amount on a time basis, and a calculating section which calculates a first hydraulic pressure from the current operation amount of the second operation member and the vehicle speed of the motorcycle when the second operation member is again operated after the operation of the second operation member is once released, and which calculates a second hydraulic pressure by subtracting a value obtained by multiplying the operation interval by the hydraulic pressure reducing amount on a time basis from hydraulic pressure which has been supplied to the first braking force generating mechanism before the operation of the second operation member was released, thereby to change at least one of the output of the brake fluid pump and the opening of the second on-off valve such that hydraulic pressure supplied to the first braking force generating mechanism becomes one of the first hydraulic pressure and the second hydraulic pressure, whichever is greater.

When a rider intentionally accelerates the motorcycle until the second operation member is again operated after the operation of the second operation member is released, an influence exerted on a rider due to a difference between a braking force obtained at the time of the last operation and a braking force obtained at the time of the current operation is small. Therefore, it is preferable that when the vehicle speed of the motorcycle increases until the second operation member is again operated after the operation of the second operation member is once released, the control unit determines hydraulic pressure to be supplied to the first braking force generating mechanism irrespective of the operation interval.

The layout of the first and the second braking force generating mechanisms in the motorcycle is not limited. For example, when the motorcycle includes a front wheel and a rear wheel, the first braking force generating mechanism is provided to the rear wheel. Further, the second braking force generating mechanism is provided to the front wheel.

The structure of the vehicle speed sensor is also not especially The structure of the the vehicle sensor is also not especially limited. For example, the vehicle speed sensor may include a front wheel rotation speed sensor which detects a rotation speed of the front wheel, and a rear wheel rotation speed sensor which detects a rotation speed of the rear wheel. In this case, the control unit calculates a vehicle speed of the motorcycle based on a rotation speed of the front wheel and a rotation speed of the rear wheel. A method of calculating a vehicle speed is not especially limited. For example, the vehicle speed may be an average value of the rotation speed of the front wheel and the rotation speed of the rear wheel.

In the braking system for a motorcycle, a braking force generated with respect to the first braking force generating mechanism when the second operation member is operated is varied in accordance with a vehicle speed of the motorcycle when the second operation member is operated. For this reason, the braking force obtained with respect to the operation amount of the second operation member can be stabilized with respect to a vehicle speed.

Hereinafter, the present invention is illustrated and explained by means of preferred embodiments in conjunction with the accompanying drawings. In the drawings wherein:

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing control during front associationed operation;
Fig. 9 is a flowchart showing control during the front associationed operation;
Fig. 10 is a flowchart showing control during the front associationed operation;
Fig. 11 is a reference hydraulic pressure map in an embodiment;
Fig. 12 is a coefficient map in the embodiment;
Fig. 13 is a flowchart showing operation interval counting operation stop control;
Figs. 14 are one example of schematic time chart when hydraulic pressures supplied to the first braking force generating mechanism 35 during the time of the front associationed operation are differentiated depending upon the vehicle speed when brake lever is operated but an operation interval (Δt) is not taken into account; Fig. 14(a) shows a vehicle speed; Fig. 14(b) shows an operation amount of the brake lever; and Fig. 14 (c) shows hydraulic pressure supplied to the first braking force generating mechanism;
Figs. 15 (a) to 15(c) are one example of schematic time chart in the embodiment; Fig. 15(a) shows a vehicle speed; Fig. 15(b) shows an operation amount of the brake lever; Fig. 15(c) shows hydraulic pressure supplied to the first braking force generating mechanism; and

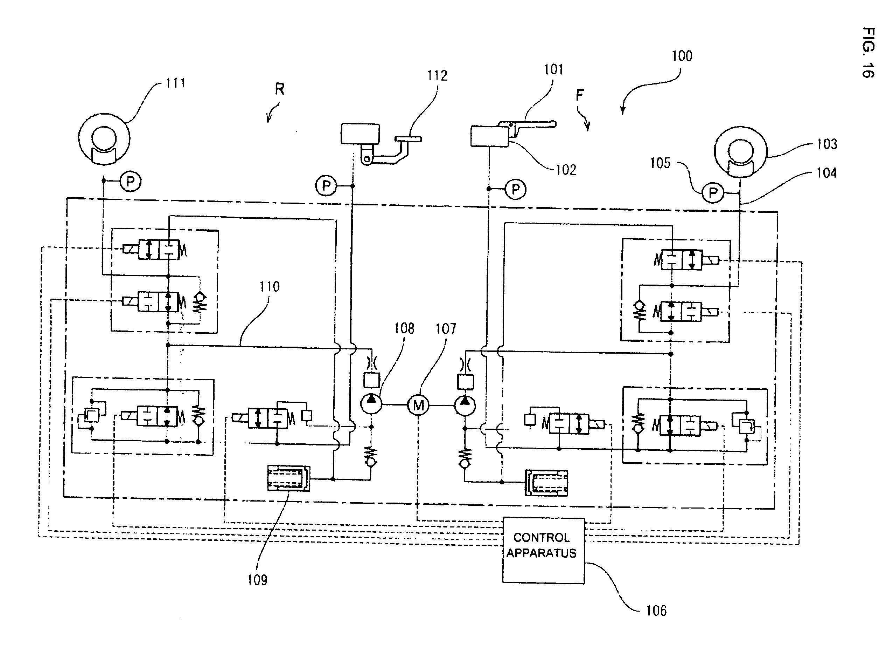

Fig. 16 is a brake fluid circuit diagram of the braking system described in JP2006-312372A.

One example of a preferred mode in which the present invention is implemented will be described. However, the invention is not limited to the embodiment below.

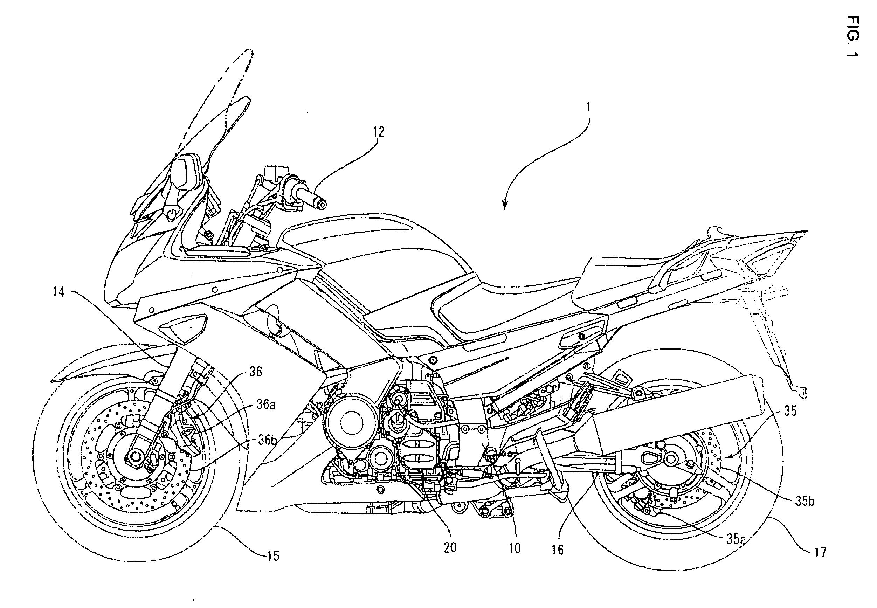

In this embodiment, one example of a preferred mode in which the present invention is implemented will be described based on a motorcycle 1 in a narrow sense shown in Fig. 1.

In the present invention, the motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in a narrow sense in addition to the motorcycle in the narrow sense. The motorcycle in the broad sense includes a vehicle having two or more front wheels and/or two or more rear wheels.

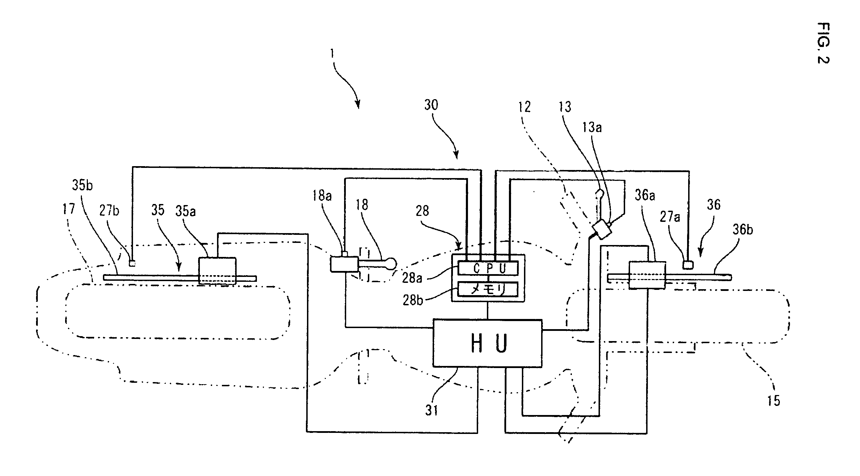

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16 . The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in a HU (Hydraulic Unit) 31.

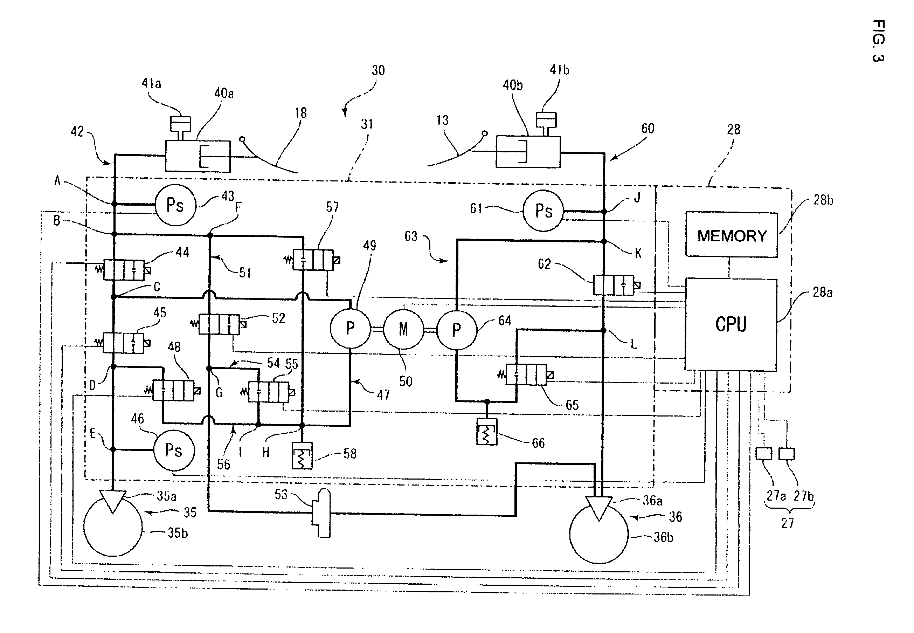

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second braking force generating mechanism 36 includes a second caliper 36a and a second brake disk 36b. More specifically, the second brake disk 36b rotates together with the front wheel 15.

As shown in Fig. 3, the first braking force generating mechanism 35 is connected to a first master cylinder 40a through a first brake fluid passage 42. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 is connected to a point A of the first brake fluid passage 42. The second hydraulic pressure sensor 43 detects hydraulic pressure at the point A of the first brake fluid passage 42.

A first on-off valve 44 and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied, and which closes when electric power is supplied. The third on-off valve 45 is disposed between the point C and a point D of the first brake fluid passage 42. The third on-off valve 45 is also an open-when-nonenergized type on-off valve like the first on-off valve 44.

A third hydraulic pressure sensor 46 is connected to a point E of the first brake fluid passage 42. The third hydraulic pressure sensor 46 can measure hydraulic pressure more precisely than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the side of the first braking force generating mechanism 35 are connected to each other through a third brake fluid passage 47. The third brake fluid passage 47 extends from the point B to the point C through a point F and a point H.

A (first) brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied and which opens when electric power is supplied.

Further, a buffer chamber 58 is connected to the point H of the third brake fluid passage 47.

The point F, which is located closer to the point B than the second on-off valve 57, is connected to the second caliper 36a through a fourth brake fluid passage 51. A fifth on-off valve 52 is disposed between the point F and a point G of the fourth brake fluid passage 51. The fifth on-off valve 52 is an open-when-nonenergized type on-off valve. A metering valve 53 is disposed between the point G of the fourth brake fluid passage 51 and the second caliper 36a.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. The operation amount of the brake lever 13 is detected also by the stroke sensor 13a. The detected operation amount of the brake lever 13 is output to the CPU 28a.

A first hydraulic pressure sensor 61 as an operation amount detection section is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

As described above, in this embodiment, the first hydraulic pressure sensor 61 detects both hydraulic pressure in the second brake fluid passage 60 and the operation of the brake lever 13. Therefore, as compared with a case where a special-purpose sensor for detecting the operation of the brake lever 13 is provided, the number of parts can be reduced and the structure can be simplified.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the side of the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27.

A method for calculating a vehicle speed from the front wheel rotation speed and the rear wheel rotation speed is not especially limited. For example, an average value of the front wheel rotation speed and the rear wheel rotation speed may be defined as the vehicle speed.

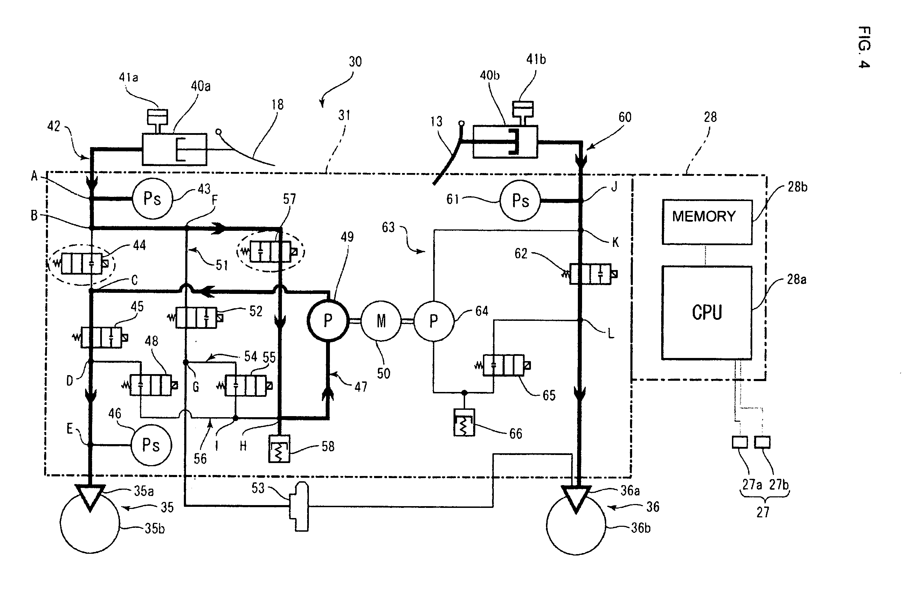

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the apen-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and the brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

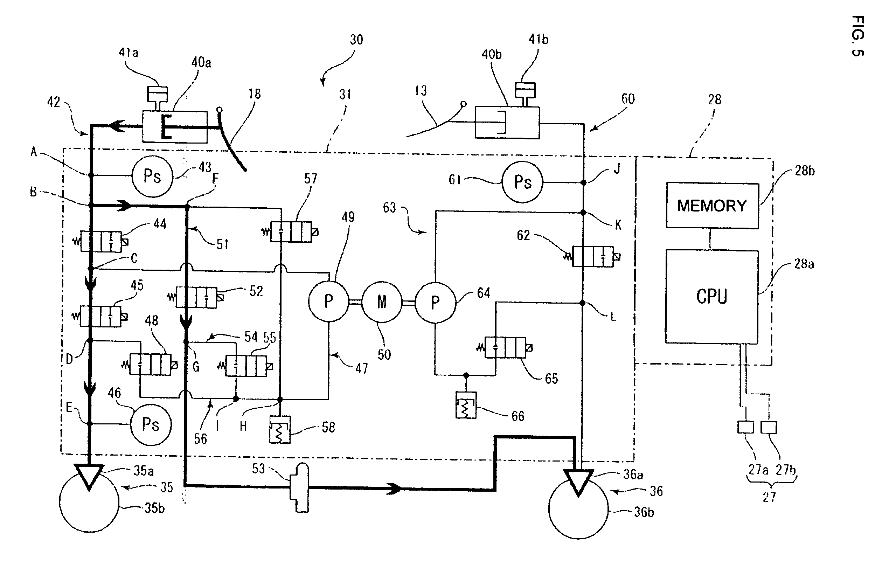

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves. Therefore, the brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

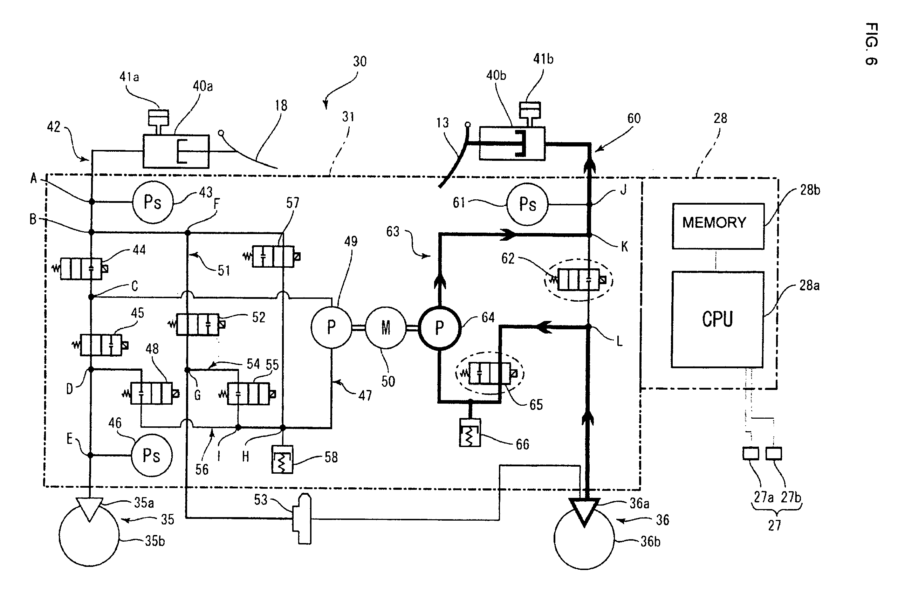

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

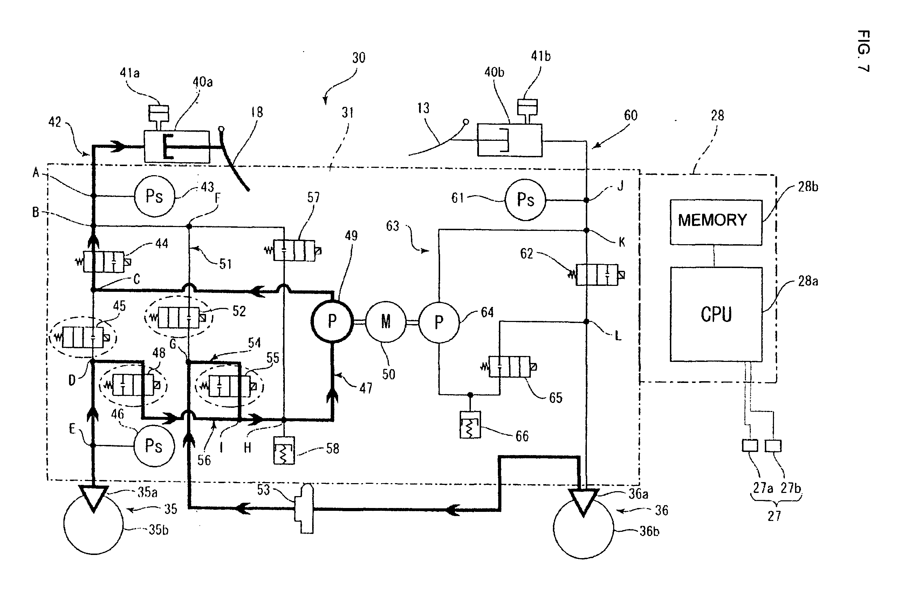

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, the brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

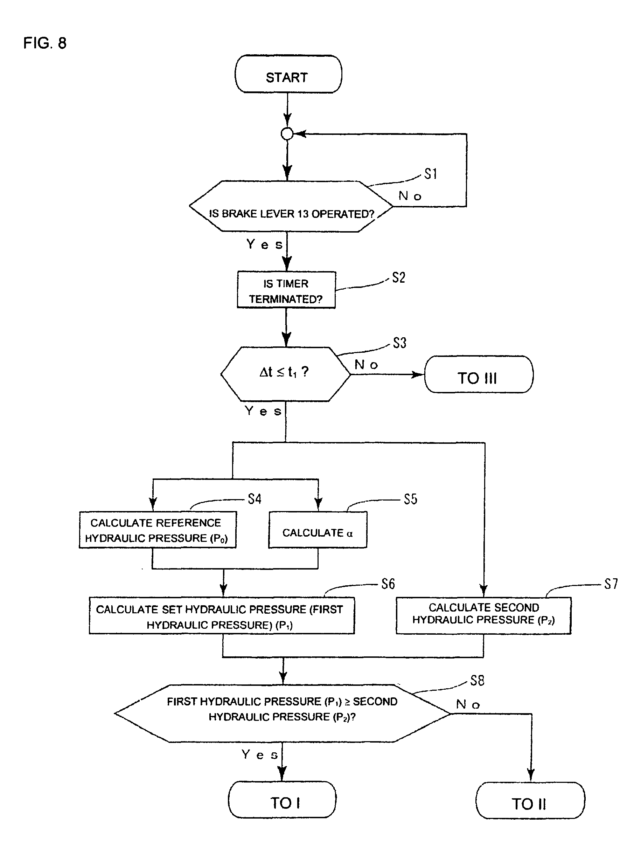

Next, detailed control during the front associationed operation in the braking system 30 will be described mainly with reference to Fig. 8.

As shown in Fig. 8, the ECU 28 first determines in step S1 whether or not the brake lever 13 is being operated. In this embodiment, it is determined whether or not the brake lever 13 is being operated based on hydraulic pressure detected by the first hydraulic pressure sensor 61.

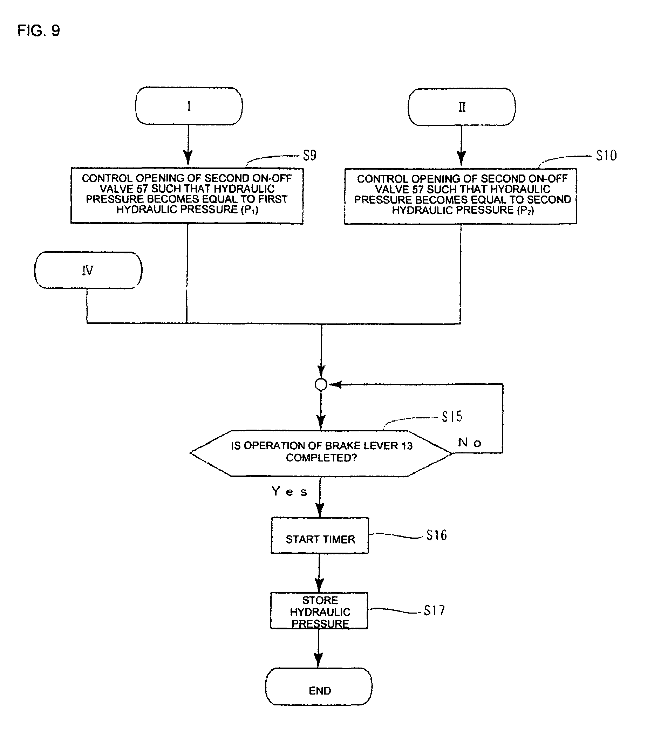

Next, step S2 is executed. In step S2, the CPU 28a finishes a timer, and causes the memory 28b to store the counted time period (operation interval (Δt)). This timer was started in later-described step S16 (see Fig. 9) when the brake lever 13 was operated previously.

When the brake lever 13 was not operated previously, the operation interval (Δt) is determined as ∞.

Next, step S3 is executed. In step S3, the CPU 28a determines whether or not the operation interval (Δt) stored in the memory 28b in step S2 is equal to or less than a predetermined interval t₁ When it is determined in step S3 that Δt ≤t₁ the procedure is advanced to step S4 and step S5.

In this embodiment, an example in which step S4 and step S5 are simultaneously executed will be described. However, the present invention is not limited to this configuration. For example, step S5 may be executed after step S4, or step S5 may be executed before step S4.

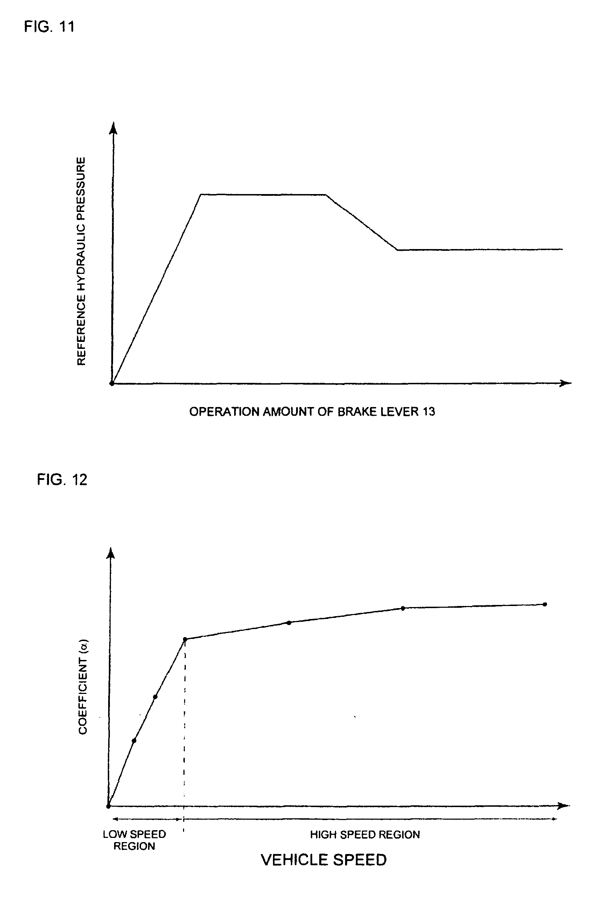

In step S4, the CPU 28a calculates a reference hydraulic pressure (P₀). Specifically, the reference hydraulic pressure (P₀) is calculated in the following manner . The memory 28b stores therein a reference hydraulic pressure map, as shown in Fig. 11, that defines a relation between an operation amount of the brake lever 13 and reference hydraulic pressure. The CPU 28a reads the reference hydraulic pressure map from the memory 28b. The CPU 28a applies the operation amount of the brake lever 13 calculated from hydraulic pressure detected by the first hydraulic pressure sensor 61 to the reference hydraulic pressure map, thereby calculating the reference hydraulic pressure (P₀).

The reference hydraulic pressure map shown in Fig. 11 is only an example. The reference hydraulic pressure map is not limited to that shown in Fig. 11. The reference hydraulic pressure map can appropriately be set in accordance with required characteristics of the motorcycle 1.

In step S5, a coefficient α is calculated by the ECU 28. This coefficient **α** is suitable for a vehicle speed of the motorcycle 1. More specifically, the memory 28b stores therein a coefficient map, as shown in Fig. 12, that defines a relation between the coefficient **α** and a vehicle speed of the motorcycle 1. The CPU 28a reads the coefficient map from the memory 28b. The CPU 28a calculates the coefficient **α** by applying a vehicle speed when the operation of the brake lever 13 is started to the coefficient map.

The coefficient map shown in Fig. 12 is only an example. The coefficient map is not limited to that shown in Fig. 12. The coefficient map can also be appropriately set in accordance with required characteristics of the motorcycle 1 like the reference hydraulic pressure map.

In the coefficient map of this embodiment, a variation amount of the coefficient **α** with respect to the variation in vehicle speed is different between in a low speed region where the vehicle speed is relatively low and in a high speed region where the vehicle speed is relatively high. More specifically, the variation amount of the coefficient **α** with respect to the variation in vehicle speed in the low speed region is set to be greater than the variation amount of the coefficient α with respect to the variation in vehicle speed in the high speed region.

Here, in the high speed region, even if the vehicle speed is varied, a magnitude of a braking force obtained with respect to the operation amount of the second operation member is not varied so much. In the low speed region, on the contrary, if the vehicle speed is varied, the magnitude of the braking force obtained with respect to the operation amount of the second operation member is largely varied. Therefore, by setting large the variation amount of the coefficient with respect to the variation in vehicle speed in the low speed region as in this embodiment, it is possible to further stabilize the magnitude of a braking force obtained with respect to the operation amount of the brake operation member in all speed regions.

After steps S4 and S5, step S6 is executed. In step S6, the CPU 28a calculates a set hydraulic pressure (a first hydraulic pressure) (P₁)based on the reference hydraulic pressure (P₀) and the coefficient **α** More specifically, in this embodiment, the CPU 28a calculates the set hydraulic pressure (the first hydraulic pressure) (P₁ by multiplying the reference hydraulic pressure (P₀) by the coefficient **α**

In this embodiment, step S7 is executed in parallel with steps S4 to S6. Step S7 may be executed before or after steps S4 to S6.

In step S7, a second hydraulic pressure (P₂) is calculated. The second hydraulic pressure (P₂) is calculated based on the operation interval (Δt)and hydraulic pressure which had been supplied to the first braking force generating mechanism 35 when the brake lever 13 was operated last time. The hydraulic pressure which had been supplied to the first braking force generating mechanism 35 when the brake lever 13 was operated last time is stored in later-described step S17.

More specifically, the second hydraulic pressure (P₂) is calculated in the following manner. A hydraulic pressure reducing amount per predetermined time is stored in the memory 28b. The CPU 28a calculates the second hydraulic pressure (P₂₎ by subtracting a reducing amount obtained by multiplying the hydraulic pressure reducing amount by the operation interval (Δt) from hydraulic pressure which had been supplied to the first braking force generating mechanism 35 when the brake lever 13 was operated last time. If the brake lever 13 was not operated last time, hydraulic pressure which was supplied to the first braking force generating mechanism 35 when the brake lever 13 was operated last time is set to zero. Thus, the second hydraulic pressure (P₂)is also calculated as zero.

Step S8 is executed after steps S6 and S7 are completed. In step S8, the ECU 28 determines whether or not the set hydraulic pressure (the first hydraulic pressure) (P₁) is equal to or greater than the second hydraulic pressure (P₂). If it is determined in step S8 that the set hydraulic pressure (the first hydraulic pressure) (P₁) is equal to or greater than the second hydraulic pressure (P₂), the procedure is advanced to step S9 shown in Fig. 9.

In step S9, the ECU 28 controls the second on-off valve 57 such that hydraulic pressure supplied to the first braking force generating mechanism 35 becomes equal to the set hydraulic pressure (the first hydraulic pressure) (P₁). More specifically, the opening of the second on-off valve 57 is adjusted while keeping output of the first brake fluid pump 49 constant, thereby adjusting hydraulic pressure supplied to the first braking force generating mechanism 35. The hydraulic pressure supplied to the first braking force generating mechanism 35 in step S9 and later-described step S10 is hydraulic pressure which is detected by the third hydraulic pressure sensor 46.

In this embodiment, the opening of the second on-off valve 57 is adjusted while keeping output of the first brake fluid pump 49 constant, thereby adjusting hydraulic pressure supplied to the first braking force generating mechanism 35 as described above. Therefore, as compared with a case where hydraulic pressure supplied to the first braking force generating mechanism 35 by adjusting output of the first brake fluid pump 49, it is possible to precisely and swiftly adjust hydraulic pressure supplied to the first braking force generating mechanism 35.

If it is determined in step S8 that the set hydraulic pressure (the first hydraulic pressure) (P₁) is less than the second hydraulic pressure (P₂) , the procedure is advanced to step S10. In step S10, the ECU 28 controls the second on-off valve 57 such that hydraulic pressure supplied to the first braking force generating mechanism 35 becomes equal to the set hydraulic pressure (the second hydraulic pressure) (P₂). More specifically, the opening of the second on-off valve 57 is adjusted while keeping output of the first brake fluid pump 49 constant, thereby adjusting hydraulic pressure supplied to the first braking force generating mechanism 35.

Therefore, in this embodiment, if the operation interval (Δt) is equal to or less than a predetermined interval t_{1,}hydraulic pressure supplied to the first braking force generating mechanism 35 is set to one of the set hydraulic pressure (the first hydraulic pressure) (P₁) and the second hydraulic pressure (P₂), whichever is greater. In other words, hydraulic pressure supplied to the first braking force generating mechanism 35 is not less than the second hydraulic pressure (P₂) obtained by considering the operation interval (Δt)and hydraulic pressure which was supplied last time to the first braking force generating mechanism 35.

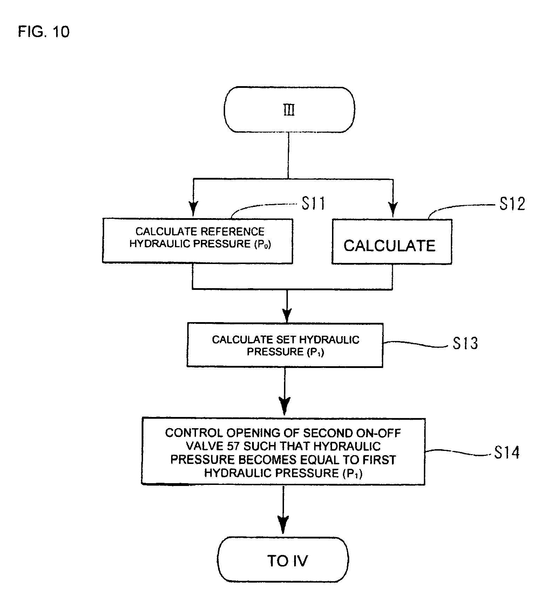

If it is determined in step S3 that the operation interval (Δt) is longer than the predetermined interval t_{1,}the procedure is advanced to step S11 and step S12 shown in Fig. 10.

In this embodiment, an example in which step S11 and step S12 are executed in parallel will be described. However, the invention is not limited to this configuration. For example, step S11 may be executed before or after step S12.

In step S11, the reference hydraulic pressure (P₀) is calculated in the same procedure as that of step S4 above.

In step S12, the coefficient **α** is calculated in the same procedure as that of step S5 above.

After step S11 and step S12 are completed, step S13 is executed. In step S13, the set hydraulic pressure (P₁)is calculated in the same procedure as that of step S6 above.

After step S13, the procedure is advanced to step S14. In step S14, like step S9 above, the ECU 28 controls the second on-off valve 57 such that hydraulic pressure supplied to the first braking force generating mechanism 35 becomes equal to the set hydraulic pressure (the first hydraulic pressure) (P₁)

Therefore, if the operation interval (At) is longer than the predetermined interval t₁, hydraulic pressure supplied to the first braking force generating mechanism 35 is always equal to the set hydraulic pressure (the first hydraulic pressure) (P₁₎

As shown in Fig. 9, step S15 is executed after steps S9, S10 and S14. In step S15, the ECU 28 determines whether or not the operation of the brake lever 13 is completed based on hydraulic pressure detected by the first hydraulic pressure sensor 61. If it is determined that the operation of the brake lever 13 is not completed, step S15 is again executed.

When it is determined that the operation of the brake lever 13 is completed, the procedure is advanced to step S16. In step S16, the ECU 28 starts a timer for counting the operation interval (Δt).

Step S17 is executed after step S16. In step S17, the CPU 28a causes the memory 28b to store hydraulic pressure supplied to the first braking force generating mechanism at the time 35 when the operation of the brake lever 13 is completed.

Although step S17 is executed after step S16 in this embodiment, step S17 may be executed before step S16, or step S17 and step S16 may be executed in parallel.

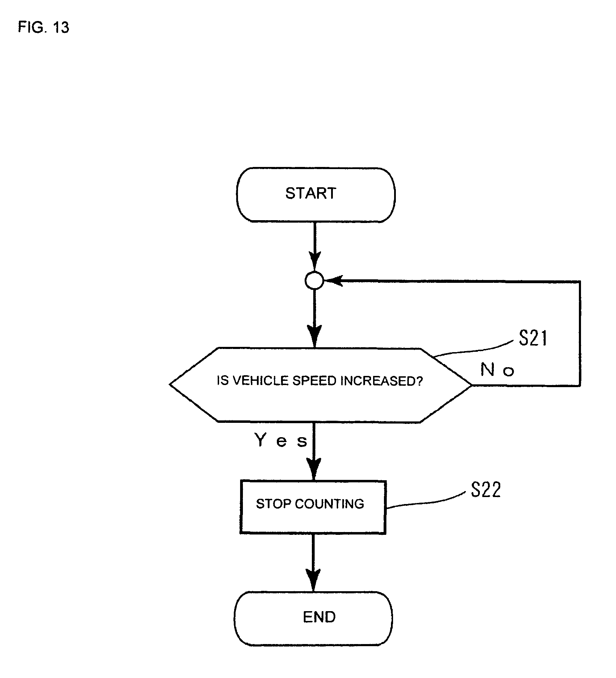

In this embodiment, operation interval counting operation stop control shown in Fig. 13 is also performed by the ECU 28.

As shown in Fig. 13, the ECU 28 determines in step S21 whether or not a vehicle speed is increased. If it is determined in step S21 that the vehicle speed is not increased, step S21 is again executed.

On the other hand, if it is determined in step S21 that the vehicle speed is increased, the procedure is advanced to step S22. In step S22, the timer is stopped by the CPU 28a and the counting of the operation interval is terminated. The CPU 28a sets the operation interval (Δt) to zero, and causes the memory 28b to store it.

Therefore, if the vehicle speed is increased between the last time operation of the brake lever 13 and the current time operation of the brake lever 13, steps S4 to S10 are not executed, and hydraulic pressure supplied to the first braking force generating mechanism 35 is always set to the set hydraulic pressure (the first hydraulic pressure) (P₁)

Although the vehicle speed is determined in step S21 in this embodiment, throttle opening may be determined. That is, the CPU 28a may determine in step S21 whether or not the Th opening is increased.

As described above, in this embodiment, when the brake lever 13 is operated, hydraulic pressure suitable for a vehicle speed when the brake lever 13 as the second operation member is operated is supplied to the first braking force generating mechanism 35. As a result, a braking force suitable for a vehicle speed when the brake lever 13 as the second operation member is operated is generated during the front associationed operation. Thus, the magnitude of the braking force obtained with respect to the operation amount of the brake lever 13 can be stabilized with respect to the vehicle speed.

Generally, there is a tendency that as a vehicle speed is increased, a braking force generated with respect to the operation amount of the brake lever 13 is reduced. Therefore, in this embodiment, hydraulic pressure supplied to the first braking force generating mechanism 35 with respect to the operation amount of the brake lever 13 is controlled to be increased as the vehicle speed is higher. As a result, a braking effect that a rider feels when a vehicle speed becomes high is equal to that when a vehicle speed is low. Accordingly, a rider's feeling of incongruity is reduced.

In this embodiment, when the vehicle speed is zero, the coefficient **α** is zero. Therefore, the reference hydraulic pressure (P₀) becomes zero. Thus, when the motorcycle 1 is stopped and the vehicle speed is zero, the second on-off valve 57, the motor 50 and the brake fluid pump 49 are not driven even if the brake lever 13 is operated. Thus, a consumption amount of the battery electric power when the motorcycle 1 is stopped can be reduced.

In this embodiment, the first on-off valve 44 is the open-when-nonenergized type on-off valve and the second on-off valve 57 is the closed-when-nanenergized type on-off valve. For this reason, current is supplied to the first and the second on-off valves 44 and 57 only during the time of the front associationed operation, and the rest of the time, current is not supplied. Thus, the consumption amount of battery electric power can be reduced.

As in this embodiment, when hydraulic pressure supplied to the first braking force generating mechanism 35 during the time of the front associationed operation is differentiated depending upon a vehicle speed when the brake lever 13 is operated, a rider may feel incongruity in some cases if the operation interval (Δt) is small.

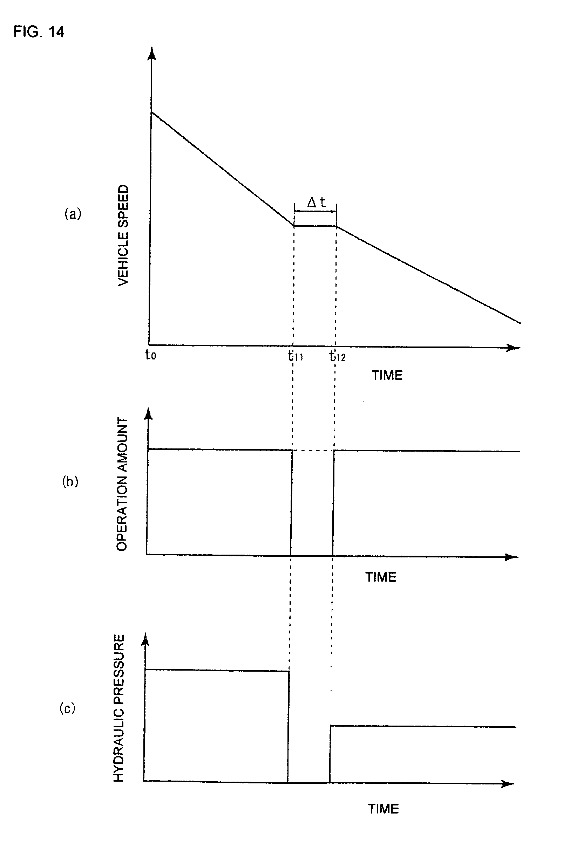

Fig. 14 is one example of a schematic time chart in which hydraulic pressure supplied to the first braking force generating mechanism 35 during the time of the front associationed operation is differentiated depending upon a vehicle speed when the brake lever 13 is operated but the operation interval (At) is not taken into account. Fig. 14(a) shows a vehicle speed. Fig. 14(b) shows an operation amount of the brake lever. Fig. 14(c) shows hydraulic pressure supplied to the first braking force generating mechanism 35.

In the following description, the control in which hydraulic pressure supplied to the first braking force generating mechanism 35 during the time of the front associationed operation is differentiated depending upon the vehicle speed when the brake lever 13 is operated but the operation interval (Δt) is not taken into account is called "control in which operation interval is not taken into account" . The vehicle speed when the brake lever 13 is operated is called "initial speed of control".

As shown in Fig. 14, for example, in the "control in which operation interval is not taken into account", even if the operation interval (At) is short, hydraulic pressure supplied to the first braking force generating mechanism 35 is different if the "initial speed of control" is different. Therefore, at time t11 and time t12, the obtained braking force is largely different even though the vehicle speeds are substantially the same and the operation amounts are the same.

Usually, when the operation interval (At) is short, a possibility is high that a rider recognizes the last time operation and the current time operation of the brake lever 13 as a series of braking operation. Despite this, in the case of the "control in which operation interval is not taken into account", obtained braking forces are largely different even though vehicle speeds are substantially the same and operation amounts are the same. Thus, there is an adverse possibility that a rider is bothered by a feeling of incongruity.

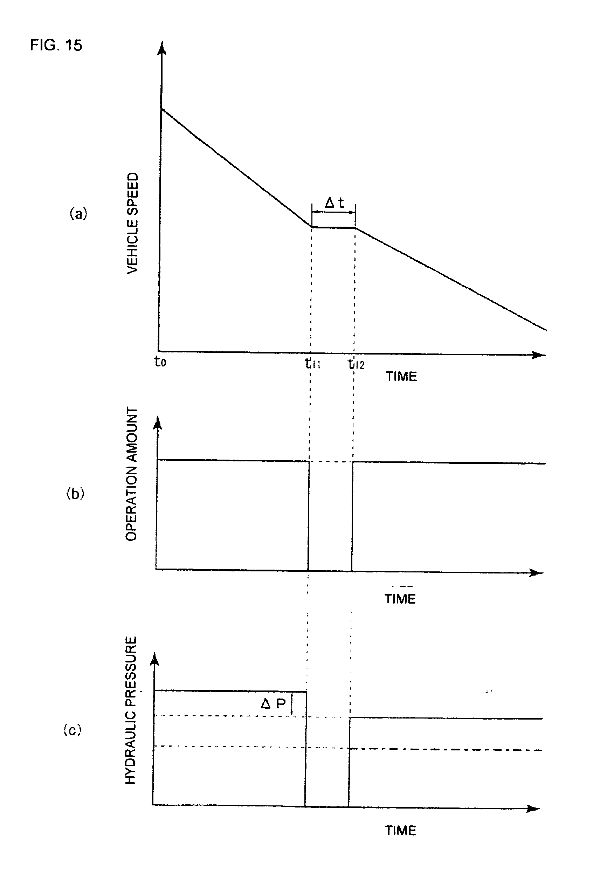

While on the other hand, in this embodiment, when the first hydraulic pressure (P₁)is largely different from hydraulic pressure supplied to the first braking force generating mechanism 35 at the time of the last time operation of the brake lever 13 as shown in Fig. 15, the second hydraulic pressure (P₂)which is greater than the first hydraulic pressure (P₁)is employed. It is therefore possible to reduce a difference (ΔP) between hydraulic pressure supplied to the first braking force generating mechanism 35 at the last time operation of the brake lever 13 and hydraulic pressure to be supplied to the first braking force generating mechanism 35 at the current time operation of the brake lever 13. Thus, a rider is less prone to be bothered by a feeling of incongruity.

When the operation interval (Δt) is long, a possibility is high that a rider does not recognize the last time operation and the current time operation of the brake lever 13 as a series of braking operation. In this embodiment, if the operation interval (At) is long, the first hydraulic pressure (P₁) suitable for the "initial speed of control" is employed. Thus, a rider is less prone to be bothered by a feeling of incongruity.

When a vehicle speed is once increased even if the operation interval (Δt) is short, a rider cannot recognize the last time operation and the current time operation of the brake lever 13 as a series of braking operation in many cases. Hence, in this embodiment, when a vehicle speed is increased between the last time operation and the current time operation of the brake lever 13, hydraulic pressure supplied to the first braking force generating mechanism 35 is always set to the set hydraulic pressure (first hydraulic pressure) (P₁)Thus, a rider is less prone to be bothered by a feeling of incongruity.

In the embodiment, the braking system includes the front wheel-side braking mechanism, the rear wheel-side braking mechanism, the front association mechanism, the rear association mechanism and the ABS mechanism. However, the braking system of the invention is not limited to this structure. The braking system of the invention may not have at least one of the front association mechanism, the rear association mechanism, and the ABS mechanism. That is, the braking system of the invention is not especially limited only if the braking system includes at least one of the front wheel-side braking mechanism, the rear wheel-side braking mechanism, the front association mechanism and the rear association mechanism.

## Claims

1. A braking system (30) for a motorcycle or any other straddle-type vehicle, including:
a first braking force generating mechanism (35) which generates a braking force when hydraulic pressure is supplied;
a first master cylinder (40a) which supplies hydraulic pressure to the first braking force generating mechanism (35);
a first brake fluid passage (42) which connects the first master cylinder (40a) and the first braking force generating mechanism (35) to each other;
a first operation member (18) for operating the first master cylinder (40a);
a second braking force generating mechanism (36) which generates braking force when hydraulic pressure is supplied;
a second master cylinder (40b) which supplies hydraulic, pressure to the second braking force generating mechanism (36);
a second brake fluid passage (60) which connects the second master cylinder (40b) and the second braking force generating mechanism (36) to each other;
a second operation member (13) for operating the second master cylinder (40b);
a first on-off valve (44) which is disposed in the first brake fluid passage (42) to open and close the first brake fluid passage (42);
a third brake fluid passage (47) which connects a portion of the first brake fluid passage (42) closer to the first master cylinder (40a) and a portion of the first brake fluid passage (42) on the side of the first braking force generating mechanism (35) than a portion thereof where the first on-off valve (44) is disposed to each other;
a brake fluid pump (49) which is disposed in the third brake fluid passage (47) to send brake fluid from the first braking force generating mechanism (35) toward the first master cylinder (40a);
a second on-off valve (57) which is disposed in the third brake fluid passage (47) to open and close the third brake fluid passage (47);
a control unit (28) which opens the first on-off valve (44) and closes the second on-off valve (57) when the second operation member (13) is not operated, and which closes the first on-off valve (44), opens the second on-off valve (57) and drives the brake fluid pump (49) when the second operation member (213) is operated; and
a vehicle speed sensor (27) which detects a vehicle speed of the motorcycle and which outputs the same to the control unit (28),
the braking system being **characterized in that**
the control unit (28) changes hydraulic pressure supplied to the first braking force generating mechanism (35) when the second operation member (13) is operated by changing at least one of the output of the brake fluid pump (49) and an opening of the second on-off valve (57) in accordance with a vehicle speed of the motorcycle detected by the vehicle speed sensor (27) when the second operation member (13) is operated,
wherein when the operation of the second operation member (13) is once released and then the second operation member (13) is again operated, the control unit (28) changes hydraulic pressure supplied to the first braking force generating mechanism (35) when the second operation member (13) is again operated, in accordance with an operation interval between the time when the operation of the second operation member (13) is released and the time when the second operation member (13) is again operated, and in accordance with hydraulic pressure which had been supplied to the first braking force generating mechanism (35) before the operation of the second operation member (13) was released.

2. A braking system (30) for a motorcycle according to claim 1, **characterized in that** the control unit (28) increases hydraulic pressure supplied to the first braking force generating mechanism (35) with respect to an operation amount of the second operation member (13) as the vehicle speed of the motorcycle detected by the vehicle speed sensor (27) when the second operation member (13) is operated is increased.

3. A braking system (30) for a motorcycle according to claim 1 or 2, further including an operation amount detection section (61) which detects an operation amount of the second operation member (13), the braking system (30) being **characterized in that** the control unit (28) includes:
a storing section (28b) which stores a hydraulic pressure map that defines a relation between the operation amount of the second operation member (13) and a reference hydraulic pressure supplied to the first braking force generating mechanism (35) when the second operation member (13) is operated; and
a calculating section (28a) which calculates a reference hydraulic pressure based on the hydraulic pressure map and the operation amount of the second operation member (13) detected by the operation amount detection section (61) when the second operation member (13) is operated, and which calculates a coefficient suitable for the vehicle speed of the motorcycle detected by the vehicle speed sensor (27), thereby to change at least one of the output of the brake fluid pump (49) and the opening of the second on-off valve (57) such that hydraulic pressure supplied to the first braking force generating mechanism (35) becomes equal to a set hydraulic pressure obtained by multiplying the reference hydraulic pressure by the coefficient.

4. The braking system (30) for a motorcycle according to claim 3, **characterized in that**
the storing section (28b) further stores a hydraulic pressure reducing amount on a time basis; and
the calculating section (28a) further calculates a first hydraulic pressure from the current operation amount of the second operation member (13) and the vehicle speed of the motorcycle when the second operation member (13) is again operated after the operation of the second operation member (13) is once released, calculates a second hydraulic pressure by subtracting a value obtained by multiplying the operation interval by the hydraulic pressure reducing amount on a time basis from hydraulic pressure which had been supplied to the first braking force generating mechanism (35) before the operation of the second operation member (13) was released, and changes at least one of the output of the brake fluid pump (49) and the opening of the second on-off valve (57) such that hydraulic pressure supplied to the first braking force generating mechanism (35) becomes one of the first hydraulic pressure and the second hydraulic pressure, whichever is greater.

5. A braking system (30) for a motorcycle according to claim 3 or 4, **characterized in that** the operation amount detection section is a hydraulic pressure sensor (61) which detects hydraulic pressure in the second brake fluid passage (60).

6. A braking system (30) for a motorcycle according to any one of claims 3 to 5, **characterized in that** the calculating section (28a) changes hydraulic pressure supplied to the first braking force generating mechanism (35) by changing the opening of the second on-off valve (57).

7. A braking system (30) for a motorcycle according to any one of claims 3 to 6, **characterized in that** in a low speed region where the vehicle speed of the motorcycle is relatively low, a variation amount of the coefficient with respect to the variation in vehicle speed of the motorcycle is greater than that in a high speed region where the vehicle speed of the motorcycle is relatively high.

8. A braking system (30) for a motorcycle according to any one of claims 1 to 7, **characterized in that** when the vehicle speed of the motorcycle detected by the vehicle speed sensor (27) is zero, the control unit (28) does not supply hydraulic pressure to the first braking force generating mechanism (35) even if the second operation member (13) is operated.

9. A braking system (30) for a motorcycle according to any one of claims 1 to 8, **characterized in that** only when the operation interval is shorter than a predetermined time period, the control unit (28) changes hydraulic pressure supplied to the first braking force generating mechanism (35) when the second operation member (13) is again operated, in accordance with the operation interval and hydraulic pressure which had been supplied to the first braking force generating mechanism (35) before the operation of the second operation member (13) was released.

10. A braking system (30) for a motorcycle according to any one of claims 1 to 9, **characterized in that** when the vehicle speed of the motorcycle increases until the second operation member (13) is again operated after the operation of the second operation member (13) is once released, the control unit (28) determines hydraulic pressure supplied to the first braking force generating mechanism (35) irrespective of the operation interval.

11. A braking system (30) for a motorcycle according to any one of claims 1 to 10,
**characterized in that** the first on-off valve (44) opens when electric power is not supplied, and closes when electric power is supplied, and
the second on-off valve (57) closes when electric power is not supplied, and opens when electric power is supplied.

12. A motorcycle
including a front wheel (15) and a rear wheel (17) and a braking system (30) for a motorcycle according to any one of claims 1 to 11, **characterized in that** the first braking force generating mechanism (35) is provided to the rear wheel (17), and the second braking force generating mechanism (36) is provided to the front wheel (15).

13. A motorcycle according to claim 12 , **characterized in that** the vehicle speed sensor (27) includes:
a front wheel rotation speed sensor (27a) which detects a rotation speed of the front wheel (15); and
a rear wheel rotation speed sensor (27b) which detects a rotation speed of the rear wheel (17).

## Patentansprüche

1. Bremssystem (30) für ein Motorrad oder irgendeinen anderen Typ von Fahrzeugen vom Grätschsitz- Typ, enthaltend:
eine erste Bremskrafterzeugungsvorrichtung (35), die eine Bremskraft erzeugt, wenn ein hydraulischer Druck zugeführt wird;
einen ersten Hauptzylinder (40a), der einen hydraulischen Druck zu der ersten Bremskrafterzeugungsvorrichtung (35) zuführt;
einen ersten Bremsfluidkanal (42), der den ersten Hauptzylinder (40a) und die erste Bremskrafterzeugungsvorrichtung (35) miteinander verbindet;
ein erstes Betätigungsteil (18) zum Betätigen des ersten Hauptzylinders (40a);
eine zweite Bremskrafterzeugungsvorrichtung (36), die eine Bremskraft erzeugt, wenn ein hydraulischer Druck zugeführt wird;
einen zweiten Hauptzylinder (40b), der einen hydraulischen Druck an die zweite Bremskrafterzeugungsvorrichtung (36) anlegt;
einen zweiten Bremsfluidkanal (60), der den zweiten Hauptzylinder (40b) und die zweite Bremskrafterzeugungsvorrichtung (36) miteinander verbindet;
ein zweites Betätigungsteil (13) zum Betätigen des zweiten Hauptzylinders (40b);
ein erstes Ein- Aus- Ventil (44), das in dem ersten Bremsfluidkanal (42) angeordnet ist, um den ersten Bremsfluidkanal (42) zu öffnen oder zu schließen;
einen dritten Bremsfluidkanal (47), der einen Abschnitt des ersten Bremsfluidkanals (42), der näher zu dem ersten Hauptzylinder (40a) ist, als ein Abschnitt desselben, wo das erste Ein- Aus- Ventil (44) miteinander angeordnet ist, und einen Abschnitt des ersten Bremsfluidkanals (42) auf der Seite der ersten Bremskrafterzeugungsvorrichtung (35) verbindet;
eine Bremsfluidpumpe (49), die in dem dritten Bremsfluidkanal (47) angeordnet ist, um Bremsfluid von der ersten Bremskrafterzeugungsvorrichtung (35) in Richtung zu dem ersten Hauptzylinder (40a) zu senden;
ein zweites Ein- Aus- Ventil (57), das in dem dritten Bremsfluidkanal (47) angeordnet ist, um den dritten Bremsfluidkanal (47) zu öffnen oder zu schließen;
eine Steuereinheit (28), die das erste Ein- Aus- Ventil (44) öffnet und das zweite Ein- Aus- Ventil (57) schließt, wenn das zweite Betätigungsteil (13) nicht betätigt wird, und das das erste Ein- Aus- Ventil (44) schließt, das zweite Ein- Aus- Ventil (57) öffnet und die Bremsfluidpumpe (49) antreibt, wenn das zweite Betätigungsteil (13) betätigt wird; und
einen Fahrzeuggeschwindigkeitssensor (27), der eine Fahrzeuggeschwindigkeit des Motorrades erfasst und dieselbe zu der Steuereinheit (28) ausgibt,
wobei das Bremssystem **dadurch gekennzeichnet ist, dass**
die Steuereinheit (28) den hydraulischen Druck, aufgebracht auf die erste Bremskrafterzeugungsvorrichtung (35), verändert, wenn das zweite Betätigungsteil (13) betätigt wird durch Verändern zumindest eines von der Ausgangsleistung der Bremsfluidpumpe (49) oder einer Öffnung des zweiten Ein- Aus- Ventils (57) in Übereinstimmung mit der Fahrzeuggeschwindigkeit des Motorrades, erfasst durch den Fahrzeuggeschwindigkeitssensor (27), wenn das zweite Betätigungsteil (13) betätigt wird,
wobei, wenn die Betätigung des zweiten Betätigungsteils (13) einmal aufgehoben ist und danach das zweite Betätigungsteil (13) wieder betätigt wird, die Steuereinheit (28) den hydraulischen Druck, zugeführt zu der ersten Bremskrafterzeugungsvorrichtung (35), verändert, wenn das zweite Betätigungsteil (13) wieder betätigt wird in Übereinstimmung mit einem Betätigungsintervall zwischen der Zeit,
wenn die Betätigung des zweiten Betätigungsteils (13) aufgehoben wird und der Zeit, wenn das zweite Betätigungsteil (13) wieder betätigt wird und in Übereinstimmung mit dem hydraulischen Druck, der der ersten Bremskrafterzeugungsvorrichtung (35) zugeführt worden ist, bevor die Betätigung des zweiten Betätigungsteil (13) aufgehoben wurde.

2. Bremssystem (30) für ein Motorrad nach Anspruch 1, **dadurch gekennzeichnet, dass** die Steuereinheit (28) den hydraulischen Druck, zugeführt an die erste Bremskrafterzeugungsvorrichtung (35) in Bezug auf einen Betätigungsbetrag des zweiten Betätigungsteil (13) erhöht, wie die Fahrzeuggeschwindigkeit des Motorrades, erfasst durch den Fahrzeuggeschwindigkeitssensor (27), wenn das zweite Betätigungsteil (13) betätigt wird, erhöht wird.

3. Bremssystem (30) für ein Motorrad nach Anspruch 1 oder 2, außerdem enthaltend einen Betätigungsbetrag- Erfassungsabschnitt (61), der einen Betätigungsbetrag des zweiten Betätigungsteils (13) erfasst, wobei das Bremssystem (30) **dadurch gekennzeichnet ist, dass** die Steuereinheit (28) enthält:
einen Speicherabschnitt (28b), der ein hydraulisches Druckdiagramm speichert, der eine Beziehung zwischen dem Betätigungsbetrag des zweiten Betätigungsteils (13) und einem hydraulischen Referenzdruck, zugeführt zu der ersten Bremskrafterzeugungsvorrichtung (35), festlegt, wenn das zweite Betätigungsteil (13) betätigt wird; und
einen Berechnungsabschnitt (28a), der einen hydraulischen Referenzdruck berechnet auf der Grundlage des hydraulischen Druckdiagramms und dem Betätigungsbetrag des zweiten Betätigungsteils (13), erfasst durch den Betätigungsbetrag- Erfassungsabschnitt (61), wenn das zweite Betätigungsteil (13) betätigt wird, und der einen Koeffizienten berechnet, geeignet für die Fahrzeuggeschwindigkeit des Motorrades, erfasst durch den Fahrzeuggeschwindigkeitssensor (27), um dadurch zumindest einen von der Ausgangsleistung der Bremsfluidpumpe (49) oder der Öffnung des zweiten Ein- Aus- Ventils (57) derart zu verändern, dass der hydraulische Druck, zugeführt zu der ersten Bremskrafterzeugungsvorrichtung (35), zu einem festgelegten hydraulischen Druck, erhalten durch Multiplizieren des hydraulischen Referenzdruckes mit dem Koeffizienten, gleich wird.

4. Bremssystem (30) für ein Motorrad nach Anspruch 3, **dadurch gekennzeichnet, dass**
der Speicherabschnitt (28b) außerdem einen hydraulischer Druck- Reduzierungsbetrag auf einer Zeitgrundlage speichert; und
der Berechnungsabschnitt (28a) außerdem einen ersten hydraulischen Druck aus dem momentanen Betätigungsbetrag des zweiten Betätigungsteils (13) und der Fahrzeuggeschwindigkeit des Motorrades berechnet, wenn das zweite Betätigungsteil (13) wieder betätigt wird, nachdem die Betätigung des zweiten Betätigungsteils (13) einmal aufgehoben ist, einen zweiten hydraulischen Druck berechnet durch Subtrahieren eines Wertes, erhalten durch Multiplizieren des Betätigungsintervalls mit dem den hydraulischen Druck reduzieren Betrag auf einer Zeitgrundlage von dem hydraulischen Druck, der auf die erste Bremskrafterzeugungsvorrichtung (35) aufgebracht worden war, bevor die Betätigung des zweiten Betätigungsteils (13) aufgehoben wurde, und zumindest eine von der Bremsfluidpumpe (49) oder der Öffnung des zweiten Ein- Aus- Ventils (57) derart verändert, dass der hydraulische Druck, zugeführt zu der ersten Bremskrafterzeugungsvorrichtung (35), einer von dem ersten hydraulischen Druck oder dem zweiten hydraulischen Druck wird, je nachdem , welcher größer ist.

5. Bremssystem (30) für ein Motorrad nach Anspruch 3 oder 4, **dadurch gekennzeichnet, dass** der Betätigungsbetrag- Erfassungsabschnitt ein hydraulischer Drucksensor (61) ist, der den hydraulischen Druck in dem zweiten Bremsfluidkanal (60) erfasst.

6. Bremssystem (30) für ein Motorrad nach einem der Ansprüche 3 bis 5, **dadurch gekennzeichnet, dass** der Berechnungsabschnitt (28a) den hydraulischen Druck, aufgebracht auf die erste Bremskrafterzeugungsvorrichtung (35) durch Verändern der Öffnung des zweiten Ein- Aus- Ventils (57), verändert.

7. Bremssystem (30) für ein Motorrad nach einem der Ansprüche 3 bis 6, **dadurch gekennzeichnet, dass** in einem Niedrig- Geschwindigkeitsbereich, wo die Fahrzeuggeschwindigkeit des Motorrades relativ niedrig ist, ein Veränderungsbetrag des Koeffizienten in Bezug auf die Veränderung in der Fahrzeuggeschwindigkeit des Motorrades größer ist, als in einem Hoch- Geschweindigkeitsbereich, wo die Fahrzeuggeschwindigkeit verhältnismäßig hoch ist.

8. Bremssystem (30) für ein Motorrad nach einem der Ansprüche 1 bis 7, **dadurch gekennzeichnet, dass**, wenn die Fahrzeuggeschwindigkeit des Motorrades, erfasst durch den Fahrzeuggeschwindigkeitssensor (27), Null ist, die Steuereinheit (28) den hydraulischen Druck nicht an die erste Bremskrafterzeugungsvorrichtung (35) anlegt, selbst wenn das zweite Betätigungsteil (13) betätigt wird.

9. Bremssystem (30) für ein Motorrad nach einem der Ansprüche 1 bis 8, **dadurch gekennzeichnet, dass** nur dann, wenn das Betätigungsintervall kürzer als eine vorbestimmte Zeitdauer ist, die Steuereinheit (28) den hydraulischen Druck, zugeführt an die erste Bremskrafterzeugungsvorrichtung (35), verändert, wenn das zweite Betätigungsteil (13) wieder in Übereinstimmung mit dem Betätigungsintervall und dem hydraulischen Druck betätigt wird, der der ersten Bremskrafterzeugungsvorrichtung (35) zugeführt wird, bevor die Betätigung des zweiten Betätigungsteiles (13) aufgehoben wurde.

10. Bremssystem (30) für ein Motorrad nach einem der Ansprüche 1 bis 9, **dadurch gekennzeichnet, dass** wenn sich die Fahrzeuggeschwindigkeit des Motorrades erhöht, bis das zweite Betätigungsteil (13) wieder betätigt wird, nachdem die Betätigung des zweiten Betätigungsteils (13) einmal aufgehoben ist, die Steuereinheit (28) den hydraulischen Druck, zugeführt zu der ersten Bremskrafterzeugungsvorrichtung (35) unabhängig von dem Betätigungsintervall festlegt.

11. Bremssystem (30) für ein Motorrad nach einem der Ansprüche 1 bis 10, **dadurch gekennzeichnet, dass** das erste Ein- Aus- Ventil (44) öffnet, wenn keine Elektroenergie zugeführt wird, und schließt, wenn Elektroenergie zugeführt wird, und das zweite Ein- Aus- Ventil (57) schließt, wenn keine Elektroenergie zugeführt wird, und öffnet, wenn Elektroenergie zugeführt wird.

12. Motorrad (30), enthaltend ein Vorderrad (15) und ein Hinterrad (17) und ein Bremssystem (30) für ein Motorrad nach einem der Ansprüche 1 bis 11, **dadurch gekennzeichnet, dass** die erste Bremskrafterzeugungsvorrichtung (35) an dem Hinterrad (17) angeordnet ist und die zweite Bremskrafterzeugungsvorrichtung (36) an dem Vorderrad (15) vorgesehen ist.

13. Motorrad nach Anspruch 12, **dadurch gekennzeichnet, dass** der Fahrzeuggeschwindigkeitssensor (27) enthält:
einen Vorderrad- Drehzahlsensor (27a), der eine Drehzahl des Vorderrades (15) erfasst, und
einen Hinterrad- Drehzahlsensor (27a), der eine Drehzahl des Hinterrades (17) erfasst.

## Revendications

1. Système de freinage (30) pour un motocycle ou tout autre type de véhicule du type à enfourcher, comprenant :
un premier mécanisme générateur de force de freinage (30) qui génère une force de freinage quand une pression hydraulique est fournie ;
un premier maître-cylindre (40a) qui fournit une pression hydraulique au premier mécanisme générateur de force de freinage (35) ;
un premier passage de fluide de frein (42) qui relie entre eux le premier maître-cylindre (40a) et le premier mécanisme générateur de force de freinage (35) ;
un premier organe d'actionnement (18) pour actionner le premier maître-cylindre (40a) ;
un deuxième mécanisme générateur de force de freinage (36) qui génère une force de freinage quand une pression hydraulique est fournie ;
un deuxième maître-cylindre (40b) qui fournit une pression hydraulique au deuxième mécanisme générateur de force de freinage (36) ;
un deuxième passage de fluide de frein (60) qui relie entre eux le deuxième maître-cylindre (40b) et le deuxième mécanisme générateur de force de freinage (36) ;
un deuxième organe d'actionnement (13) pour actionner le deuxième maître-cylindre (40b) ;
une première soupape marche-arrêt (44) qui est disposée dans le premier passage de fluide de frein (42) pour ouvrir et fermer celui-ci ;
un troisième passage de fluide de frein (47) qui relie entre elles une partie du premier passage de fluide de frein (42) plus proche du premier maître-cylindre (40a) qu'une partie dudit passage où est disposée la première soupape marche-arrêt (44), et une partie du premier passage de fluide de frein (42) située du côté du premier mécanisme générateur de force de frein (35) ;
une pompe de fluide de frein (49) qui est disposée dans le troisième passage de fluide de frein (47) pour envoyer le fluide de frein du premier mécanisme générateur de force de freinage (35) vers le premier maître-cylindre (40a) ;
une deuxième soupape marche-arrêt (57) qui est disposée dans le troisième passage de fluide de frein (47) pour ouvrir et fermer celui-ci ;
une unité de commande (28) qui ouvre la première soupape marche-arrêt (44) et ferme la deuxième soupape marche-arrêt (57) quand le deuxième organe d'actionnement (13) n'est pas actionné, et qui ferme la première soupape marche-arrêt (44), ouvre la deuxième soupape marche-arrêt (57) et entraîne la pompe de fluide de frein (49) quand le deuxième organe d'actionnement (13) est actionné ;
un détecteur de vitesse de véhicule (27) qui détecte une vitesse de véhicule du motocycle et qui la transmet à l'unité de commande (28) ;
le système de freinage étant **caractérisé en ce que**
l'unité de commande (28) modifie la pression hydraulique fournie au premier mécanisme générateur de force de freinage (35) quand le deuxième organe d'actionnement (13) est actionné, en modifiant le débit de la pompe de fluide de frein (49) et/ou une ouverture de la deuxième soupape marche-arrêt (57) selon une vitesse de véhicule du motocycle qui est détectée par le capteur de vitesse de véhicule (27) quand le deuxième organe d'actionnement (13) est actionné,
étant précisé que lorsque l'actionnement du deuxième organe d'actionnement (13) est relâché une fois et que celui-ci est ensuite à nouveau actionné, l'unité de commande (28) modifie la pression hydraulique fournie au premier mécanisme générateur de force de freinage (35) quand l'organe d'actionnement (13) est à nouveau actionné, selon un intervalle d'actionnement entre le moment où l'actionnement du deuxième organe d'actionnement (13) est relâché et le moment où il est à nouveau actionné, et selon la pression hydraulique qui avait été fournie au premier mécanisme générateur de force de freinage (35) avant que l'actionnement du deuxième organe d'actionnement (13) ne soit relâché.

2. Système de freinage (30) pour un motocycle selon la revendication 1, **caractérisé en ce que** l'unité de commande (28) augmente la pression hydraulique fournie au premier mécanisme générateur de force de freinage (35) par rapport à un degré d'actionnement du deuxième organe d'actionnement (13) quand la vitesse de véhicule du motocycle détectée par le détecteur de vitesse de véhicule (27) quand l'organe d'actionnement (13) est actionné augmente.

3. Système de freinage (30) pour un motocycle selon la revendication 1 ou 2, comprenant par ailleurs une section de détection de degré d'actionnement (61) qui détecte un degré d'actionnement du deuxième organe d'actionnement (13), le système de freinage (30) étant **caractérisé en ce que** l'unité de commande (28) comprend :
une section de stockage (28b) qui stocke un tableau de pression hydraulique qui définit une relation entre le degré d'actionnement du deuxième organe d'actionnement (13) et une pression hydraulique de référence fournie au premier mécanisme générateur de force de freinage (35) quand le deuxième organe d'actionnement (13) est actionné ; et
une section de calcul (28a) qui calcule une pression hydraulique de référence sur la base du tableau de pression hydraulique et du degré d'actionnement du deuxième organe d'actionnement (13) détecté par la section de détection de degré d'actionnement (61) quand le deuxième organe d'actionnement (13) est actionné, et qui calcule un coefficient approprié pour la vitesse de véhicule du motocycle détectée par le capteur de vitesse de véhicule, pour modifier ainsi le débit de la pompe de fluide de frein (49) et/ou l'ouverture de la deuxième soupape marche-arrêt (57) de telle sorte que la pression hydraulique appliquée au premier mécanisme générateur de force de freinage (35) devienne égale à une pression hydraulique fixée, obtenue en multipliant la pression hydraulique de référence par le coefficient.

4. Système de freinage (30) pour un motocycle selon la revendication 3, **caractérisé en ce que**
la section de stockage (28b) stocke également un degré de réduction de pression hydraulique sur une base de temps ; et
la section de calcul (28a) calcule également une première pression hydraulique à partir du degré d'actionnement actuel du deuxième élément d'actionnement (13) et de la vitesse de véhicule du motocycle quand le deuxième organe d'actionnement (13) est à nouveau actionné après avoir été relâché une fois, calcule une deuxième pression hydraulique en soustrayant une valeur, obtenue en multipliant l'intervalle d'actionnement par le degré de réduction de pression hydraulique sur une base de temps, de la pression hydraulique qui avait été fournie au premier mécanisme générateur de force de freinage (35) avant que l'actionnement du deuxième organe d'actionnement (13) ne soit relâché, et modifie le débit de la pompe de fluide de frein (49) et/ou l'ouverture de la deuxième soupape marche-arrêt (57) de telle sorte que la pression hydraulique fournie au mécanisme générateur de force de freinage (35) devienne la première ou la deuxième pression hydraulique, celle qui est la plus élevée.

5. Système de freinage (30) pour un motocycle selon la revendication 3 ou 4, **caractérisé en ce que** la section de détection de degré d'actionnement est constituée par un capteur de pression hydraulique (61) qui détecte la pression hydraulique dans le deuxième passage de fluide de frein (60).

6. Système de freinage (30) pour un motocycle selon l'une quelconque des revendications 3 à 5, **caractérisé en ce que** la section de calcul (28a) modifie la pression hydraulique fournie au premier mécanisme générateur de force de freinage (35), en modifiant l'ouverture de la deuxième soupape marche-arrêt (57).

7. Système de freinage (30) pour un motocycle selon l'une quelconque des revendications 3 à 6, **caractérisé en ce que** dans une plage de vitesse faible dans laquelle la vitesse de véhicule du motocycle est relativement faible, un degré de variation du coefficient par rapport à la variation de vitesse de véhicule du motocycle est plus grand que dans une plage de vitesse élevée dans laquelle la vitesse de véhicule du motocycle est relativement élevée.

8. Système de freinage (30) pour un motocycle selon l'une quelconque des revendications 1 à 7, **caractérisé en ce que** lorsque la vitesse de véhicule du motocycle détectée par le capteur de vitesse de véhicule (27) est égale à zéro, l'unité de commande (28) ne fournit pas de pression hydraulique au premier mécanisme générateur de force de freinage (35) même si le deuxième organe d'actionnement (13) est actionné.

9. Système de freinage (30) pour un motocycle selon l'une quelconque des revendications 1 à 8, **caractérisé en ce que** ce n'est que lorsque l'intervalle d'actionnement est plus court qu'un laps de temps prédéterminé, que l'unité de commande (28) modifie la pression hydraulique fournie au premier mécanisme générateur de force de freinage (35) quand le deuxième organe d'actionnement (13) est à nouveau actionné, selon l'intervalle d'actionnement et la pression hydraulique qui avait été fournie au premier mécanisme générateur de force de freinage (35) avant que l'actionnement du deuxième organe d'actionnement (13) ne soit relâché.

10. Système de freinage (30) pour un motocycle selon l'une quelconque des revendications 1 à 9, **caractérisé en ce que** lorsque la vitesse de véhicule du motocycle augmente jusqu'à ce que le deuxième organe d'actionnement (13) soit à nouveau actionné, après que l'actionnement du deuxième organe d'actionnement (13) est relâché, l'unité de commande (28) détermine la pression hydraulique fournie au premier mécanisme générateur de force de freinage (35) quel que soit l'intervalle d'actionnement.

11. Système de freinage (30) pour un motocycle selon l'une quelconque des revendications 1 à 10, **caractérisé en ce que** la première soupape marche-arrêt (44) s'ouvre quand du courant électrique n'est pas fourni, et se ferme quand du courant électrique est fourni, et
la deuxième soupape marche-arrêt (57) se ferme quand du courant électrique n'est pas fourni, et s'ouvre quand du courant électrique est fourni.

12. Motocycle ou tout autre type de véhicule du type à enfourcher, comprenant une roue avant (15), une roue arrière (17) et un système de freinage (30) pour un motocycle selon l'une quelconque des revendications 1 à 11, **caractérisé en ce que** le premier mécanisme générateur de force de freinage (35) est prévu sur la roue arrière (17), et le deuxième mécanisme générateur de force (36) est prévu sur la roue avant (15).

13. Motocycle selon la revendication 12, **caractérisé en ce que** le capteur de vitesse de véhicule (27) comprend :
un capteur de vitesse de rotation de roue avant (27a) qui détecte une vitesse de rotation de la roue avant (15) ; et
un capteur de vitesse de rotation de roue arrière (27b) qui détecte une vitesse de rotation de la roue arrière (17).
